**Europäisches Patentamt**

**European Patent Office**

**Office européen des brevets**

(11) Veröffentlichungsnummer: **0 192 787**

**A1**

## (12) EUROPÄISCHE PATENTANMELDUNG

(21) Anmeldenummer: **85101956.2**

(22) Anmeldetag: **22.02.85**

(51) Int. Cl.⁴: **B 23 Q 17/22**
**B 23 Q 1/16, G 05 B 19/23**

(43) Veröffentlichungstag der Anmeldung:
**03.09.86 Patentblatt 86/36**

(84) Benannte Vertragsstaaten:
**DE FR GB IT SE**

(71) Anmelder: **Pajakanta Oy**
**Salmikatu 2**
**SF-65200 Vaasa 20(FI)**

(72) Erfinder: **Niemi, Pertti Kalevi**
**Onkilahdenkatu 10**
**SF-65200 Vaasa 20(FI)**

(74) Vertreter: **Jackisch, Walter, Dipl.-Ing.**
**Menzelstrasse 40**
**D-7000 Stuttgart 1(DE)**

(54) **Drehtisch zur Aufnahme von Werkstücken oder Werkstücken oder Werkzeugen.**

(57) Ein Drehtisch zum Befestigen und zur Aufnahme von Werkstücken oder Werkzeugen ist zur Positionierung und/oder zum Antrieb mit vorwählbarer Drehzahl von Werkstücken oder Werkzeugen vorgesehen. Der Drehtisch hat ein Gehäuse (1), einen darin gelagerten Drehteller (2), einen Antriebsmotor (3), der den Drehteller (2) über ein Untersetzungsgetriebe (4) antreibt, einen Impulsgenerator (9), der so mit dem Drehteller (2) verbunden ist, daß er entsprechend dem Drehwinkel und/oder der Drehgeschwindigkeit des Drehtellers (2) Impulse abgibt, sowie eine Bremsvorrichtung (6) um den Drehteller in vorbestimmbarer Position anzuhalten und zu arretieren. Die Aufgabe besteht darin, den Drehtisch so auszubilden, daß die Positoniergenauigkeit den Anforderungen enger Fertigungstoleranzen genügt. Dies wird dadurch gelöst, daß der Antriebsmotor (3) über ein als Planetengetriebe arbeitendes Untersetzungsgetriebe (4) mit dem Drehteller (2) verbunden ist, das unter dem Drehteller (2) befestigt ist, daß eine mit dem Drehteller (2) rotierende Bremsscheibe (7) vorgesehen ist, die in Richtung ihrer Drehachse flexibel, aber radial und tangential dazu starr ausgebildet ist und die durch Betätigungsmittel (8) gegen das Gehäuse (1) oder gegen am Gehäuse (1) befestigte Teile preßbar ist, wobei die Druckkraft des Betätigungsmittels (8) nicht auf die Lager (22,23) des Drehtellers (2) gerichtet ist, und daß ein Kranz (10a) großen Durchmessers mit dem Drehteller (2) rotiert, der einen Teil des Impulsgenerators (9) oder der Steuerung bildet.

./...

*Fig.1*

Patentanwalt
Dipl.-Ing. W. Jackisch
Menzelstr. 40, 7000 Stuttgart 1

Oy Pajakanta Ab
Salmikatu 2
65200 Vaasa 20
Finnland

A 1-86 575 /beoa     0192787

21. Februar 1985

Drehtisch zur Aufnahme von Werkstücken oder Werkzeugen

Die vorliegende Erfindung betrifft einen Drehtisch zur
Befestigung und Aufnahme von Werkstücken oder Werkzeugen,
um diese in eine vorbestimmte Position zu bringen oder
mit vorbestimmter Drehzahl zu rotieren. Der Drehtisch
enthält ein Gehäuse, einen darin drehbar gelagerten Drehteller, einen Antriebsmotor zum Antrieb des Drehtellers
über eine Untersetzungsgetriebe, einen mit dem Drehteller
in Verbindung stehenenden Impulsgenerator (Pulser), der
in Abhängigkeit vom Drehwinkel des Drehtellers eine
bestimmte Anzahl von Impulsen erzeugt, wodurch die Drehstellung und/oder Drehgeschwindigkeit des Tellers erfaßt
wird, sowie eine Bremsvorrichtung, um den Drehteller in
einer vorbestimmten Stellung anzuhalten und zu arretieren.

Bekannte Drehtische dieser Art sind so ausgebildet,
daß die Positioniergenauigkeit des Drehtellers nicht
den gewünschten engen Toleranzgrenzen entspricht. Dies
ist auch einer der Gründe, warum die bekannten Drehtische
nicht eingesetzt werden, wenn extrem hohe Fertigungsgenauigkeiten gefordert sind. Die Positionierfehler vergrößern sich mit zunehmender Größe des Drehtisches,
weshalb die Abmessungen gebräuchlicher Drehtische auch
recht klein sind.

Bei den meisten der bekannten Drehtische wird als Untersetzungsgetriebe ein Schneckengetriebe mit einer Untersetzung von z. B. 1 : 35 eingesetzt. Ein Impulsgenerator ist üblicherweise in Verbindung mit einem Antriebsmotor vorgesehen. Ein Schneckengetriebe hat immer, insbesondere aber nach längerer Betriebszeit, ein gewisses Spiel, das die Positioniergenauigkeit verschlechtert. Ein weiterer Faktor, der zu einer Verschlechterung der Positioniergenauigkeit führt, ist die Bremsvorrichtung, deren Kraft über die Lager des Drehtellers auf das Gehäuse übertragen wird. Wegen des bei Lagern immer vorhandenen Lagerspiels führt dies auch zu einer Positionierungenauigkeit des abgebremsten Drehtellers.

Der Erfindung liegt die Aufgabe zugrunde, einen genau positionierbaren Drehtisch zu schaffen und insbesondere die Nachteile bekannter Drehtische zu vermeiden.

Diese Aufgabe wird bei einem gattungsgemäßen Drehtisch mit den kennzeichnenden Merkmalen des Anspruches 1 gelöst.

Ein Ausführungsbeispiel der Erfindung wird im einzelnen anhand der Zeichnungen beschrieben. Es zeigen:

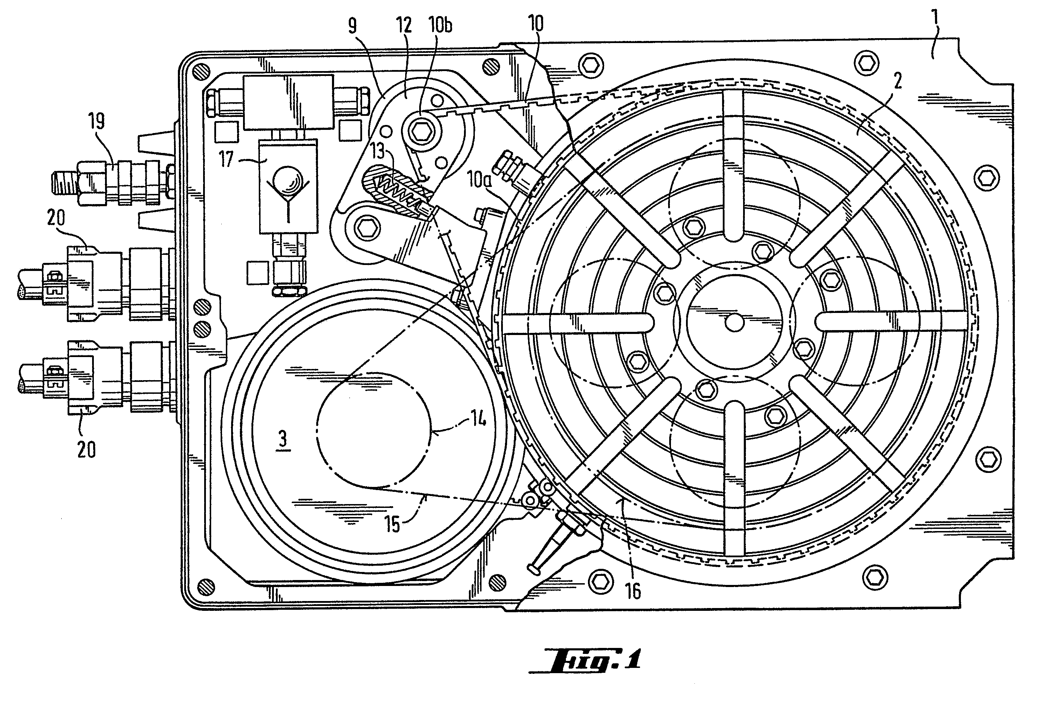

Fig. 1    eine Draufsicht auf einen Drehtisch nach der Erfindung, wobei Teile des Gehäusedeckels zur besseren Darstellung entfernt sind,

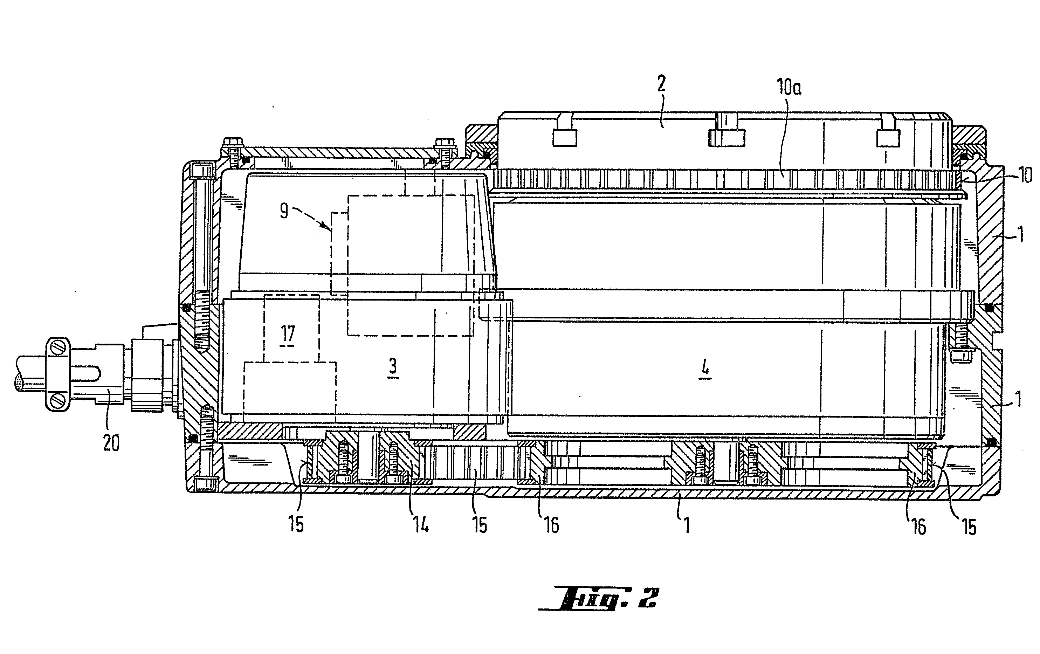

Fig. 2    eine Seitenansicht eines Drehtisches nach Fig. 1, wobei das Gehäuse im Längsschnitt dargestellt ist,

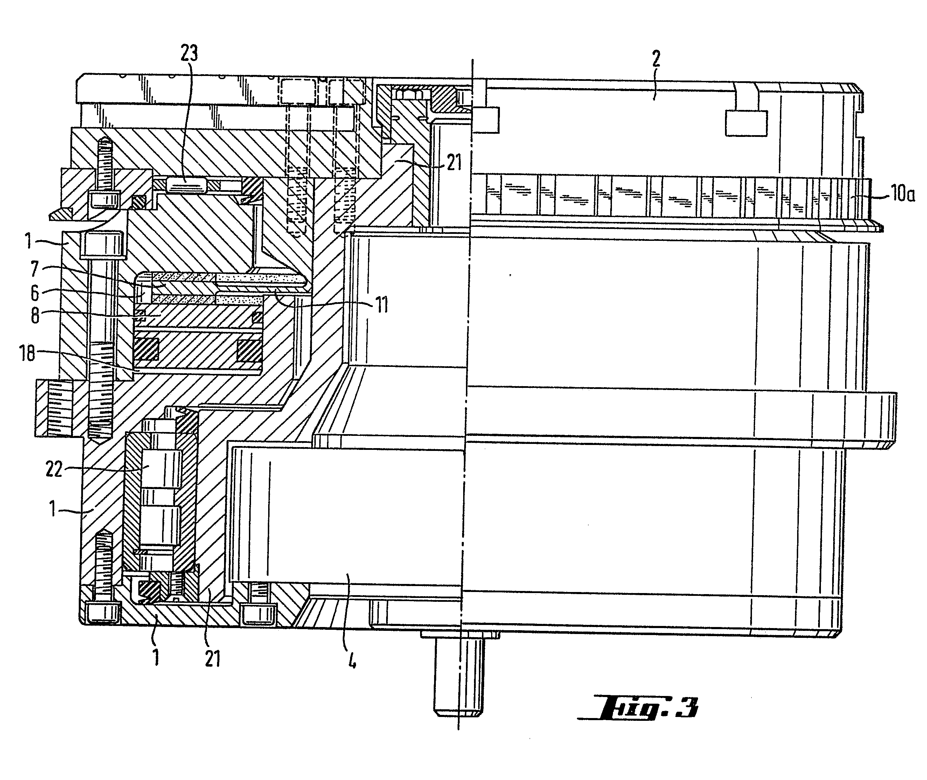

Fig. 3    das Innere eines Drehtisches, der in der linken Hälfte im Schnitt dargestellt ist, so daß die Bremsvorrichtung zu erkennen ist.

Der Drehtisch hat ein Gehäuse 1, in dem der eigentliche Drehteller 2 drehbar gelagert ist. In dieser Ausführungsform ist der Drehteller 2 mit radial zu seiner Drehachse angeordneten Nuten versehen, die zur Befestigung des zu bearbeitenden Werkstückes dienen. Ein Gleichstrommotor 3 treibt über eine Zahnriemenscheibe 14, einen Zahnriemen 15, eine weitere Zahnriemenscheibe 16 und ein Untersetzungsgetriebe 4 den Drehteller 2 an. Um die Drehzahl des Gleichstrommotors 3 zu untersetzen, weist das Getriebe 4 ein untersetzendes Planetengetriebe auf. Als besonders vorteilhaft hat sich ein spezielles, unter dem Warenzeichen "Cyklo-Drive" bekanntes Planetengetriebe erwiesen, das nach dem Prinzip der "arched plate" arbeitet. Das Untersetzungsgetriebe 4 kann direkt unter dem Drehteller 2 angebracht sein, damit es auf diese Weise im Gehäuse 1 möglichst kompakt untergebracht werden kann.

An der Unterseite des Drehtellers 2 ist eine sich nach unten erstreckende Hülse oder Laufbuchse 21 angebracht, die mit dem sich drehenden Teller 2 mitläuft und das Untersetzungsgetriebe 4 umschließt. Am Außenumfang ist das untere Ende der Laufbuchse 21 auf dem Gehäuse 1 von Lagern 22 abgestützt. Der Drehteller 2 ist außerdem mittels Lagern 23 auf dem Gehäuse 1 gelagert.

Um beim Abbremsen des Drehtellers 2 in seine Halteposition die Positioniergenauigkeit zu sichern, ist der Drehteller 2 mit einer im folgenden beschriebenen Bremsvorrichtung ausgestattet. Hierzu ist eine Bremsscheibe 7 vorgesehen, die zusammen mit dem Drehteller 2 umläuft und die beim Bremsen durch einen Kolben 8 eines pneumatischen oder hydraulischen Zylinders gegen das Gehäuse 1 gedrückt wird. Die Druckkraft des Kolbens 8 beim Bremsvorgang belastet dadurch die Lager des Drehtellers 2 nicht. Die ringförmige Bremsscheibe 7 liegt zwischen den Reibflächen des Kolbens 8 und dem entsprechenden Gehäuseteil. Damit selbst dann, wenn die Reibflächen verschlissen
sind, die Bremsvorrichtung die Bremskräfte nicht in
Richtung auf die Lager des Drehtellers 2 leitet, ist die
Bremsscheibe 7 durch eine dünne, nachgiebige Ringscheibe
11 mit dem Drehteller 2 verbunden. Die Bremsscheibe 7
ist auf diese Weise in axialer Richtung flexibel, während
sie in radialer Richtung und in Längsrichtung starr
ist.

Um mit höchster Genauigkeit die exakte Winkelposition des
Drehtellers 2 bestimmen zu können, die zum Positionieren
eines Drehtellers erforderlich ist, wenn entsprechende
Fertigungstoleranzen eingehalten werden sollen, werden
bei einer Drehtellerumdrehung 360.000 Impulse von einem
Impulsgenerator 9 erzeugt; das entspricht eimem Impuls
pro 1°/1000.  Dies wird z. B. durch eine Zahnriemenscheibe
10a großen Durchmessers erreicht, die am Außenumfang
des Drehtellers 2 vorgesehen ist und die über einen Zahnriemen 10 mit einer Zahnriemenscheibe 10b mit kleinem
Durchmesser verbunden ist, die auf einer Welle des Impulsgenerators 9 sitzt. In einer alternativen Ausführung
ist der Außenmantel des Drehtellers 2 mit einem ringförmigen Rand großen Durchmessers versehen, der eine
große Zahl (z. B. 360.000) von kleinen Öffnungen aufweist,
die über den Umfang verteilt angeordnet sind. Auf einer
Seite dieses perforierten Randes ist eine Lampe oder
ein Laser angeordnet und auf der anderen Seite ein Detektor, der immer dann einen Impuls abgibt, wenn der Laser-
oder Lichtstrahl durch eine der Öffnungen im Kranz durchtritt und den Detektor erreicht. Solche Impulsgeberanordnungen sind in anderem Zusammenhang schon bekannt.
In einer weiteren Ausführungsform ist die Oberfläche
eines ringförmiges Randes, der zusammen mit dem Drehteller
2 rotiert, mit zahlreichen Strichen oder Linien versehen,
die den Strahl eines Lasers oder einer Lampe vom Rand zum Detektor reflektieren. Wichtig bei der erfindungsgemäßen Anwendung ist, daß die im Durchmesser große Zahnriemenscheibe oder Rand 10a, der zusammen mit dem Drehteller 2 rotiert, ein Teil eines Impulsgenerators oder
seiner Steuer- bzw. Regelvorrichtung bildet. Dann ist
die Verbindung zwischen Drehteller 2 und Impulsgenerator
so direkt und spielfrei wie nur möglich.

Wie im Ausführungsbeispiel dargestellt, ist ein Impulsgenerator 9 an dem einen Ende eines drehbar gelagerten
Hebels 12 befestigt. Der Hebel 12 ist durch eine Feder 13
derart kraftbeaufschlagt, daß der Zahnriemen 10 gespannt
wird. Er ist auf diese Weise immer gleich stark gespannt,
so daß Ungenauigkeiten durch Schlupf verhindert werden.

Von einer Zuführung 19 gelangt Druckmedium in Form von
Druckluft oder Hydraulikflüssigkeit durch ein elektrisch
gesteuertes Ventil 17 in einen Zylinderraum 18 unterhalb
des Kolbens 8. Sobald der Gleichstrommotor 3 anhält,
wird das Ventil 17 betätigt, worauf sich der Druck im
Zylinderraum 18 aufbaut und die Bremsvorrichtung 6 den
Drehteller 2 in der jeweiligen Position hält.

Die mit dem Bezugszeichen 20 gekennzeichneten Verbindungen
führen zu einer elektrischen Kontroll- und Steuereinheit.

Dipl.-Ing. W. Jackisch
Menzelstr. 40, 7000 Stuttgart 1

A 1-86 575 /beoä **0192787**

Oy Pajakanta Ab
Salmikatu 2
65200 Vaasa 20
Finnland

21. Februar 1985

Ansprüche

1. Drehtisch zur Befestigung und Aufnahme von Werkstücken
oder Werkzeugen, die in eine vorbestimmte Position gebracht und/oder mit einer vorbestimmten Drehzahl rotiert
werden sollen, mit einem Gehäuse (1), einem in ihm gelagerten Teller (2), einem Antriebsmotor (3), der den
Drehteller (2) über ein Untersetzungsgetriebe (4) antreibt, das unterhalb des Drehtellers (2) befestigt ist,
mit einem Impulsgenerator (9), der in Abhängigkeit vom
Drehwinkel des Drehtellers (2) eine bestimmte Anzahl
von Impulsen erzeugt, die zur Erfassung der Winkelposition und/oder Drehgeschwindigkeit des Tellers (2)
dienen, mit einer Bremsvorrichtung (6), die zum Abbremsen
und Arretieren des Tellers (2) in einer vorbestimmten
Position vorgesehen ist, und mit einer Bremsscheibe (7),
die zusammen mit dem Drehteller (2) rotiert und die
in Richtung der Drehachse flexibel, in radialer und
tangentialer Richtung starr, und die beim Bremsen durch
Betätigungsmittel (8) gegen das Gehäuse (1) oder am
Gehäuse (1) befestigte Teile preßbar ist, wobei die
Druckkraft des Betätigungsmittels (8) nicht auf Lager
(22, 23) des Drehtellers (2) gerichtet ist, und mit
einem Kranz (10a) großen Durchmessers, der zusammen mit
dem Drehteller (2) rotiert und koaxial zu ihm angeordnet
ist und der einen Teil des Impulsgenerators (9) bildet, dadurch gekennzeichnet, daß ein separat drehbarer Impulsgenerator (9) vom rotierenden Kranz (10a) mechanisch
angetrieben ist, wobei das Übersetzungsverhältnis zwischen
Drehteller (2) und Impulsgenerator (9) so ausgelegt
ist, daß eine Umdrehung des Drehtellers (2) mehreren
100.000 Impulsen vom Impulsgenerator (9) entspricht.

2. Drehtisch nach Anspruch 1,
dadurch gekennzeichnet, daß die ringförmige Bremsscheibe
(7) zwischen am Gehäuse (1) und an einem pneumatisch
oder hydraulisch betätigbaren Kolben (8) vorgesehenen
Reibflächen anpreßbar ist, und daß die Bremsscheibe (7)
mit dem Drehteller (2) durch eine dünne, nachgiebige
Ringscheibe (11) verbunden ist.

3. Drehtisch nach Anspruch 1 oder 2,
dadurch gekennzeichnet, daß an der Unterseite des Drehtellers (2) eine Buchse (21) befestigt ist, die zusammen
mit dem Drehteller rotiert und die das Untersetzungsgetriebe (4) umschließt und deren unteres Ende am Außenumfang durch Lager (22) am Gehäuse (1) abgestützt ist.

**Fig. 1**

0192787

0192787

Fig. 2

Fig. 3

0192787

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | GB-A-2 119 542 (SOMMER) <br> * Insgesamt * | 1 | B 23 Q 17/22 <br> B 23 Q 1/16 <br> G 05 B 19/23 |
| A | | 2 | |
| | --- | | |
| A | FR-A-2 388 640 (FUJITSU FANUC) <br> * Seite 4; Figur 1 * | 1 | |
| | --- | | |
| T | DE-A-3 343 556 (FRITZ) <br> * Seite 29, Zeile 10 - Seite 31, Zeile 21; Figuren 3-6 * | 1 | |
| | --- | | |
| A | JP-A-53 056 785 (MITSUBISHI JUKOGYO) <br> * Figuren 2,3 * | 1,2 | |
| | --- | | **RECHERCHIERTE SACHGEBIETE (Int. Cl. 4)** |
| A | US-A-3 412 633 (HUNTLEY) <br> * Insgesamt * | 3 | |
| | --- | | B 23 Q <br> G 05 B |
| A | US-A-3 153 355 (OPPERTHAUSER et al.) <br> * Insgesamt * | 3 | |
| | ----- | | |

Der vorliegende Recherchenbericht wurde für alle Patentansprüche erstellt.

| Recherchenort <br> DEN HAAG | Abschlußdatum der Recherche <br> 15-10-1985 | Prüfer <br> ROSENBAUM H.F.J. |
|---|---|---|